# EUROPÄISCHE PATENTSCHRIFT

(11) **EP 3 327 311 B1**
(45) Veröffentlichungstag und Bekanntmachung des Hinweises auf die Patenterteilung: **15.09.2021**
(21) Anmeldenummer: 16200381.8
(22) Anmeldetag: 24.11.2016
(51) Int. Cl.: F16H 25/24, D02H 13/18

(54) **RIETANORDNUNG**
WARPING MACHINE
MACHINE À OURDIR

(43) Veröffentlichungstag der Anmeldung: 30.05.2018
(73) Patentinhaber: KARL MAYER STOLL R&D GmbH, 63179 Obertshausen (DE)
(72) Erfinder: Kistner, Alexander, 63179 Obertshausen (DE); Bender, Michael, 63512 Hainburg (DE)
(74) Vertreter: Keil & Schaafhausen Patentanwälte PartGmbB

(56) Entgegenhaltungen:
- WO-A1-2016/056583
- DE-A1- 2 608 055
- DE-A1- 10 202 793
- DE-A1-102012 222 835
- DE-B- 1 137 275
- DE-C- 399 421

## Beschreibung

Die Erfindung betrifft eine Rietanordnung nach dem Oberbegriff des Anspruchs 1.

Eine derartige Rietanordnung mit Gewindespindel und Gewindemutter ist aus DE 2 608 055 A1 bekannt.

Eine Rietanordnung wird verwendet, um Fäden einer Fadenschar zu führen, beispielsweise bei einer Schärmaschine oder bei einer Webmaschine. Während des Betriebs einer derartigen Maschine müssen vielfach Elemente des Rietes verstellt werden. Hierbei ist eine Gewindespindel vorgesehen, auf der eine Spindelmutter angeordnet ist. Wenn die Gewindespindel gedreht wird, dann verschiebt sich die Spindelmutter parallel zur Achse der Gewindespindel und verstellt dabei Funktionselemente des Rietes. Vielfach sind auch Spindeln mit zwei gegenläufig angeordneten Außengewinden und entsprechenden Spindelmuttern im Einsatz, die dann bei einer Rotation der Gewindespindel aufeinander zu oder voneinander weg bewegt werden.

Insbesondere bei der Handhabung von Fadenscharen aus Baumwolle oder mit einem hohen Anteil von Baumwolle ergibt sich ein Problem dadurch, dass sich Baumwoltstaub, der sich beim Führen der Fäden durch die Rietanordnung bildet, auf der Gewindespindel absetzt und mit dem dort befindlichen Fett ein Gemisch bildet, das regelmäßig entfernt werden muss. Wenn dieses Gemisch nicht entfernt wird, dann frisst sich im Extremfall die Spindelmutter auf der Spindel fest. Zumindest besteht das erhebliche Risiko einer Beschädigung von Spindelmutter oder Gewindespindel.

Das Säubern der Rietanordnung ist mit einem relativ hohen Aufwand verbunden, weil die Rietanordnung hierbei zumindest teilweise zerlegt werden muss. Auch durch das Zerlegen ergibt sich ein erhöhtes Risiko einer Beschädigung.

Man hat dieses Problem bislang immer dadurch zu lösen versucht, dass man eine Abdeckung für die Gewindespindel verwendet. Da sich aber die Spindelmutter entlang der Gewindespindel bewegen muss, muss auch die Abdeckung beweglich sein, so dass sie nicht zuverlässig verhindern kann, dass sich dennoch Baumwollstaub auf der Gewindespindel ablagert.

DE 1 137 275 B zeigt eine Vorrichtung zur Schmierung von Gewindespindeln. Eine Spindelmutter, die mit ihrem Innengewinde mit dem Außengewinde eine Spindel in Eingriff steht, weist eine Sackbohrung auf, die mit einem am oberen Ende der Spindelmutter angeordneten Aufnahmeraum für ein Schmiermittel, beispielsweise Öl, in Verbindung steht. Das untere Ende der Sackbohrung ist mit einem Rücklaufkanal verbunden, durch den das Schmiermittel, das die Gewindegänge der Spindelmutter geschmiert hat, wieder zurück in den Vorratsbehälter gefördert wird.

DE 102 02 7493 A1 zeigt eine Musterketten-Schärmaschine und ein Verfahren zum Erzeugen einer Musterkette. Die die Musterkette bildenden Fäden werden von rotierenden Fadenführern von einem Drehgatter abgezogen und auf den Umfang einer Schärtrommel geführt. Die Fadenführer können den Ablageort der Fäden auf der Schärtrommel in Axialrichtung verändern, um unterschiedliche Reihenfolgen der Fäden zu erzeugen.

Der Erfindung liegt die Aufgabe zugrunde, das Risiko einer Beschädigung einer Rietanordnung klein zu halten.

Diese Aufgabe wird durch eine Rietanordnung mit den Merkmalen des Anspruchs 1 gelöst.

Die Spindelmutter kann damit eine Art Selbstreinigung durchführen. Staub oder ein Staub-Fett-Gemisch, das sich auf der Gewindespindel abgelagert hat, wird bei einer Drehung der Gewindespindel gegenüber der Spindelmutter im Bereich der Unterbrechung des Innengewindes in den Durchgangskanal verdrängt und kann von dort leicht entfernt werden. In vielen Fällen lässt sich beobachten, dass diese Verschmutzung selbst aus dem Durchgangskanal herausfällt, wenn bei der Rotation der Gewindespindel gegenüber der Spindelmutter neuer "Schmutz" nachgefördert wird. Wenn sich die Gewindespindel dreht, wird der Schmutz also in den Durchgangskanal verdrängt und das Gewinde der Gewindespindel bleibt sauber.

Eine Tangente an die Gewindebohrung und eine Tangente an dem Durchgangskanal schließen an einem Punkt, wo sich die Gewindebohrung und der Durchgangskanal schneiden, einen spitzen Winkel ein. Wenn sich die Gewindespindel gegenüber der Spindelmutter dreht, dann läuft die Umfangsfläche der Gewindespindel an einer relativ spitzen Kante vorbei, die das Abschaben des Schmutzes vom Außengewinde der Gewindespindel erleichtert.

Vorzugsweise verläuft der Durchgangskanal parallel zur Gewindebohrung. Dies erleichtert die Fertigung. Die Aufnahmefähigkeit des Durchgangskanals ist an allen axialen Positionen des Durchgangskanals in etwa gleich.

Vorzugsweise ist der Durchgangskanal als Bohrung ausgebildet. Eine Bohrung lässt sich im Korpus leicht herstellen. Der Aufwand zur Herstellung der Spindelmutter wird also klein gehalten.

Hierbei ist bevorzugt, dass die Bohrung eine Mittelachse aufweist, die außerhalb der Gewindebohrung angeordnet ist. Dies hat mehrere Vorteile. Zum einen gibt es eine definierte Position, wo ein Bohrer beim Herstellen des Durchgangskanals angesetzt werden kann, um den Durchgangskanal herzustellen. Zum anderen ergibt sich dadurch die oben erwähnte scharfe Kante, die den Schmutz von dem Außengewinde der Gewindespindel abschaben kann.

Vorzugsweise sind mindestens zwei mit der Gewindebohrung überlappende Durchgangskanäle im Gehäuse angeordnet. Damit ist es möglich, den Schmutz in beiden Rotationsrichtungen der Gewindespindel von der Gewindespindel abzuschaben und gleichzeitig zu vermeiden, dass der Schmutz einen großen Umfangsabschnitt innerhalb des Innengewindes zurücklegen muss.

Dies gilt insbesondere dann, wenn die zwei Durchgangskanäle in Umfangsrichtung der Gewindebohrung um weniger als 180° zueinander versetzt sind. Dann ergibt sich bei jeder Rotationsrichtung ein relativ kurzer Weg für den Schmutz, bis er von der Gewindespindel abgeschabt wird.

Vorzugsweise weist ein Abschnitt des Innengewindes zwischen den zwei Durchgangskanälen eine Erstreckung auf, die größer ist als eine Erstreckung der Unterbrechung des Innengewindes im Bereich der Durchgangskanäle. Das Innengewinde der Spindelmutter bleibt also ausreichend stabil, um auch größeren mechanischen Belastungen standzuhalten. Gleichzeitig wird aber die Reinigung der Gewindespindel erheblich erleichtert.

Auch ist von Vorteil, wenn der Durchgangskanal in Schwerkraftrichtung an einer unteren Hälfte der Gewindebohrung angeordnet ist. Schmutz, der von der Gewindespindel abgetragen wird, fällt dann in Schwerkraftrichtung nach unten und kann von dort aus dem Durchgangskanal herauskommen, ohne wieder auf die Gewindespindel zurück zu gelangen.

Die Erfindung wird im Folgenden anhand eines bevorzugten Ausführungsbeispiels in Verbindung mit der Zeichnung beschrieben. Hierin zeigen:
- Fig. 1: eine stark schematisierte Darstellung einer Rietanordnung,
- Fig. 2: eine Vorderansicht einer Spindelmutter und
- Fig. 3: eine Spindelmutter in perspektivischer Darstellung.

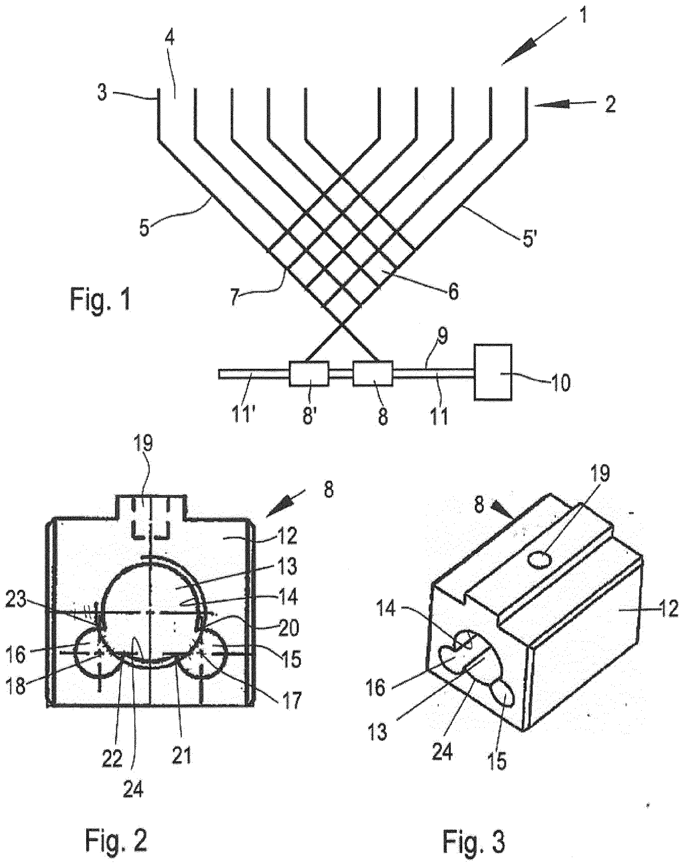

Fig. 1 zeigt stark schematisiert eine Rietanordnung 1 mit einem Riet 2, das im vorliegenden Fall eine Vielzahl von parallel angeordneten Stäben 3 aufweist. Zwischen Stäben 3 sind Gassen 4 angeordnet, durch die später Fäden einer Fadenschar geführt werden.

Jeder Stab 3 ist an einem Trägerstab 5 bzw. 5' angeordnet, wobei sich die Trägerstäbe 5, 5' kreuzen und ein Gitter 6 bilden. Die Trägerstäbe 5 sind mit den Trägerstäben 5' an Gelenkpunkten 7 gelenkig verbunden, so dass die Trägerstäbe 5 mit den Trägerstäben 5' eine Anzahl von Parallelogrammen bilden.

Die Trägerstäbe 5 sind mit einer Spindelmutter 8 und die Trägerstäbe 5' sind mit einer Spindelmutter 8' verbunden, wobei beide Spindelmuttern 8, 8' auf einer Gewindespindel 9 angeordnet sind. Die Gewindespindel 9 kann durch einen Motor 10 in Rotation versetzt werden. Die Gewindespindel 9 weist einen Abschnitt 11 mit rechtslaufendem Gewinde und einen Abschnitt 11' mit linkslaufendem Gewinde auf. Bei einer Drehung der Gewindespindel 9 durch den Motor 10 bewegen sich also die Spindelmuttern 8, 8' aufeinander zu oder voneinander weg. Bei einer derartigen Bewegung ändert sich dann der Abstand zwischen den Stäben 3 und damit die Größe der Gassen 4.

Die Gewindespindel 9 ist üblicherweise gefettet, um eine möglichst reibungsarme Drehung der Gewindespindel 9 in den Spindelmuttern 8, 8' zu gewährleisten. Die durch die Gassen 4 laufenden Fäden einer nicht näher dargestellten Fadenschar hinterlassen jedoch einen Abrieb in Form von Staub, der insbesondere bei Baumwollfäden dazu führt, dass der Baumwollstaub mit dem Fett an der Gewindespindel 9 ein Gemisch bildet, das, wenn es nicht entfernt wird, zu Problemen führen kann. Insbesondere kann es vorkommen, dass die Gewindespindel 9 und die Spindelmuttern 8, 8' fressen oder die Spindelmuttern 8, 8' oder die Gewindespindel 9 auf andere Weise beschädigt werden. Dieses Gemisch wird kurz als "Schmutz" bezeichnet.

Um dieses Risiko zu vermindern, haben die Spindelmuttern 8, 8' eine nachfolgend beschriebene Ausgestaltung. Hierbei wird lediglich die Spindelmutter 8 beschrieben. Die Spindelmutter 8' ist, abgesehen von ihrem Gewinde, gleich aufgebaut.

Die Spindelmutter 8 weist einen Korpus 12 auf, der eine Gewindebohrung 13 mit einem Innengewinde 14 aufweist. Dieses Innengewinde ist bei der Spindelmutter 8 rechtsläufig und bei der Spindelmutter 8' linksläufig.

Weiterhin weist der Korpus 12 zwei Durchgangskanäle 15, 16 auf, die vorzugsweise als Bohrungen ausgebildet sind und insbesondere parallel zur Gewindebohrung 13 verlaufen. Die Durchgangskanäle 15, 16 überlappen sich teilweise mit der Gewindebohrung 13.

Es sollte an dieser Stelle bemerkt werden, dass die Durchgangskanäle 15, 16 auch auf andere Weise als durch Bohrungen ausgebildet sein können. Die Ausbildung als Bohrung lässt sich jedoch relativ einfach herstellen.

Der Durchgangskanal 15 schneidet das Innengewinde 14 an zwei Positionen 20, 21 und der Durchgangskanal 16 schneidet das Innengewinde an zwei Positionen 22, 23. An allen Positionen (die im Grunde als Linien ausgebildet sind) schließt eine Tangente an den jeweiligen Durchgangskanal 15, 16 und eine Tangente an das Innengewinde 14 jeweils einen spitzen Winkel ein. Dadurch entsteht an diesen Positionen 20-23 eine relativ spitze oder scharfe Kante, mit der es bei einer Rotation der Gewindespindel 9 auf einfache Weise möglich ist, Schmutz, der an der Gewindespindel 9 anhaftet, von der Gewindespindel 9 abzuschaben und in den jeweiligen Durchgangskanal 15, 16 zu überführen.

Die Durchgangskanäle 15, 16 sind in Umfangsrichtung der Gewindebohrung 13 um weniger als 180° zueinander versetzt. Im vorliegenden Ausführungsbeispiel befinden sie sich also alle in der unteren Hälfte (in Schwerkraftrichtung) der Gewindebohrung 13. Dies bezieht sich auf den bestimmungsgemäßen Gebrauch der Spindelmutter 8, bei dem eine Befestigungsstelle 19 für die Trägerstäbe 5 mit den Trägerstäben 5 verbunden sein kann.

Zwischen den Durchgangskanälen 15, 16 ist ein Abschnitt 24 des Innengewindes angeordnet, der in Umfangsrichtung eine Erstreckung aufweist, die größer ist als eine Erstreckung der Unterbrechung des Innengewindes 14 durch den Durchgangskanal 15 bzw. durch den Durchgangskanal 16. Dadurch bleibt das Innengewinde 14 in ausreichendem Maße stabil.

Wenn sich die Gewindespindel 9 (bezogen auf die Darstellung der Fig. 2) im Uhrzeigersinn dreht, dann wird anhaftender Schmutz an den Positionen 21, 23 abgeschabt und in den Durchgangskanal 15 bzw. den Durchgangskanal 16 eingetragen. Wenn sich die Gewindespindel entgegen dem Uhrzeigersinn dreht, dann wird die entsprechende Reinigung an dementsprechenden Positionen 20, 22 vorgenommen. Somit erfolgt ein zweimaliges Abstreifen des Schmutzes von der Gewindespindel 9, so dass die Gewindespindel 9 vor dem Einlaufgen in den "längeren" Bereich des Innengewindes 14 so gut gesäubert ist, dass das Risiko einer Beschädigung oder eines Fressens minimiert ist. Der Abschnitt 24 des Innengewindes 14 ist so kurz, dass die Wärmeentwicklung ebenfalls klein bleibt und das Risiko einer Beschädigung oder des Fressens ebenfalls minimiert ist.

Mit der dargestellten Ausführungsform kann man auf eine Abdeckung der Gewindespindel 9 verzichten.

## Patentansprüche

1. Rietanordnung (1) mit einem Riet, das Elemente aufweist, die durch eine Spindelmutter (8, 8') verstellbar sind, wobei die Spindelmutter mit einem Korpus (12), der eine Gewindebohrung (13) mit einem Innengewinde (14) aufweist, auf einer drehbaren Spindel angeordnet ist, **dadurch gekennzeichnet, dass** der Korpus (12) mindestens einen Durchgangskanal (15, 16) aufweist, der die Gewindebohrung (13) in radialer Richtung überlappt und das Innengewinde (14) unterbricht, wobei eine Tangente an die Gewindebohrung (13) und eine Tangente an den Durchgangskanal (15, 16) an einem Punkt (20-23), wo sich die Gewindebohrung (13) und der Durchgangskanal (15, 16) schneiden, einen spitzen Winkel einschließen und eine spitze Kante bilden.

2. Rietanordnung nach Anspruch 1, **dadurch gekennzeichnet, dass** der Durchgangskanal (15, 16) parallel zur Gewindebohrung (13) verläuft.

3. Rietanordnung nach Anspruch 1 oder 2, **dadurch gekennzeichnet, dass** der Durchgangskanal (15, 16) als Bohrung ausgebildet ist.

4. Rietanordnung nach Anspruch 3, **dadurch gekennzeichnet, dass** die Bohrung eine Mittelachse (17, 18) aufweist, die außerhalb der Gewindebohrung (13) angeordnet ist.

5. Rietanordnung nach einem der Ansprüche 1 bis 4, **dadurch gekennzeichnet, dass** mindestens zwei mit der Gewindebohrung (13) überlappende Durchgangskanäle (15, 16) im Korpus (12) angeordnet sind.

6. Rietanordnung nach Anspruch 5, **dadurch gekennzeichnet, dass** die zwei Durchgangskanäle (15, 16) in Umfangsrichtung der Gewindebohrung (13) um weniger als 180° zueinander versetzt sind.

7. Rietanordnung nach Anspruch 6, **dadurch gekennzeichnet, dass** ein Abschnitt (24) des Innengewindes (14) zwischen den zwei Durchgangskanälen (15, 16) eine Erstreckung aufweist, die größer ist als eine Erstreckung der Unterbrechung des Innengewindes (14) im Bereich der Durchgangskanäle (15, 16).

8. Rietanordnung nach einem der Ansprüche 1 bis 7, **dadurch gekennzeichnet, dass** der Durchgangskanal (15, 16) in Schwerkraftrichtung an einer unteren Hälfte der Gewindebohrung (13) angeordnet ist.

## Claims

1. Reed arrangement (1) comprising a reed having elements adjustable by a spindle nut (8, 8'), the spindle nut being arranged on a rotatable spindle with a body (12) which has a threaded bore (13) with an internal thread (14), **characterized in that** the body (12) has at least one through-channel (15, 16) which overlaps the threaded bore (13) in the radial direction and interrupts the internal thread (14), wherein a tangent to the threaded bore (13) and a tangent to the through-channel (15, 16) enclose an acute angle at a point (20-23) where the threaded bore (13) and the through-channel (15, 16) intersect and form an acute edge.

2. Reed arrangement according to Claim 1, **characterized in that** the through-channel (15, 16) extends parallel to the threaded bore (13).

3. Reed arrangement according to Claim 1 or 2, **characterized in that** the through-channel (15, 16) is configured as a bore.

4. Reed arrangement according to Claim 3, **characterized in that** the bore has a central axis (17, 18) which is arranged outside the threaded bore (13).

5. Reed arrangement according to one of Claims 1 to 4, **characterized in that** at least two through-channels (15, 16) that overlap the threaded bore (13) are arranged in the body (12).

6. Reed arrangement according to Claim 5, **characterized in that** the two through-channels (15, 16) are offset through less than 180° with respect to one another in the circumferential direction of the threaded bore (13).

7. Reed arrangement according to Claim 6, **characterized in that** a portion (24) of the internal thread (14) between the two through-channels (15, 16) has an extent which is greater than an extent of the interruption to the internal thread (14) in the region of the through-channels (15, 16).

8. Reed arrangement according to one of Claims 1 to 7, **characterized in that** the through-channel (15, 16) is arranged in a lower half of the threaded bore (13) in the direction of gravitational force.

## Revendications

1. Machine à ourdir (1) avec un peigne, qui comporte des éléments, qui peuvent être réglés par un écrou de broche (8, 8'), sachant que l'écrou de broche avec un corps (12) comportant un trou fileté (13) avec un filetage intérieur (14), est disposé sur une broche pouvant tourner, **caractérisée en ce que** le corps (12) comporte au moins un conduit de passage (15, 16), qui chevauche le trou fileté (13) en direction radiale et interrompt le filetage intérieur (14), sachant qu'une tangente sur le trou fileté (13) et une tangente sur le conduit de passage (15, 16) inscrivent un angle aigu et forment une arête pointue en un point (20-23) où le trou fileté (13) et le conduit de passage (15, 16) se croisent.

2. Machine à ourdir selon la revendication 1, **caractérisée en ce que** le conduit de passage (15, 16) passe parallèlement au trou fileté (13).

3. Machine à ourdir selon la revendication 1 ou 2, **caractérisée en ce que** le conduit de passage (15, 16) est constitué comme un trou.

4. Machine à ourdir selon la revendication 3, **caractérisée en ce que** le trou comporte un axe médian (17, 18), qui est disposé en dehors du trou fileté (13).

5. Machine à ourdir selon l'une quelconque des revendications 1 à 4, **caractérisée en ce qu'**au moins deux conduits de passage (15, 16) se chevauchant avec le trou fileté (13) sont disposés dans le corps (12).

6. Machine à ourdir selon la revendication 5, **caractérisée en ce que** les deux conduits de passage (15, 16) sont déportés dans le sens périphérique du trou fileté (13) de moins de 180° l'un par rapport à l'autre.

7. Machine à ourdir selon la revendication 6, **caractérisée en ce qu'**une section (24) du filetage intérieur (14) comporte une extension entre les deux conduits de passage (15, 16), qui est plus grande qu'une extension de l'interruption de filetage intérieur (14) à proximité des conduits de passage (15, 16).

8. Machine à ourdir selon l'une quelconque des revendications 1 à 7, **caractérisée en ce que** le conduit de passage (15, 16) est disposé dans le sens de la force de gravité sur une moitié inférieure du trou fileté (13) .
